# EUROPEAN PATENT SPECIFICATION

(11) **EP 3 460 034 B1**
(45) Date of publication and mention of the grant of the patent: **08.09.2021**
(21) Application number: 18182096.0
(22) Date of filing: 06.07.2018
(51) Int. Cl.: C12G 3/02, C12G 1/02, C12H 1/22, B65D 8/00, B65D 13/02, C12C 7/04, C12C 7/20, C12C 7/28, C12C 12/04

(54) **MARBLE CONTAINER WITH STACKABLE MODULES FOR FERMENTED ALCOHOLIC DRINKS**
MARMORBEHÄLTER MIT STAPELBAREN MODULEN FÜR FERMENTIERTE ALKOHOLISCHE GETRÄNKE
RÉCIPIENT EN MARBRE AVEC MODULES EMPILABLES POUR BOISSONS ALCOOLISÉES FERMENTÉES

(30) Priority: 07.07.2017 IT 201700076208
(43) Date of publication of application: 27.03.2019
(73) Proprietor: Mauri, Manuele, 34170 Gorizia (IT)
(72) Inventor: Mauri, Manuele, 34170 Gorizia (IT)
(74) Representative: De Tullio, Michele Elio

(56) References cited:
- DE-U1- 9 306 962
- KR-A- 20110 139 852
- US-A1- 2015 337 250
- US-A1- 2017 029 755
- "Natursteintröge, Mühlsteine, Steintröge", INTERNET CITATION, 2004, pages 1-3, XP002713169, Retrieved from the Internet: URL:http://www.dersteinmann.de/index.html [retrieved on 2013-09-18]
- NN: "Kaltvergärung", INTERNET CITATION, 15 May 2007 (2007-05-15), pages 1-2, XP002717049, Retrieved from the Internet: URL:http://www.kath.de/weinlexikon/kaltver gaerung_weinlexikon.php [retrieved on 2013-11-27]
- OTHMAR KIEM: "Die Weine vom Karst", INTERNET CITATION, 18 July 2011 (2011-07-18), pages 1-4, XP002713175, Retrieved from the Internet: URL:http://www.falstaff.at/weinartikel/die -weine-vom-karst-3248.html [retrieved on 2013-09-18]

## Description

### Field of the finding

The present invention refers to a marble vat for fermented liquids suitable for human consumption.

More specifically, the present invention refers to a vat in marble designed to allow fermentation, aging and preservation of any type of fermented liquid food, such as wine, vinegar, brandy, brandy, beer, and other similar alcoholic beverages, enhancing its organoleptic characteristics.

Said vat is provided with a multiplicity of overlapping modules for its easy assembly and disassembly.

### Description of the known art.

The known art comprises vats for liquid food suitable for containing alcoholic beverages during the various stages of their production, preparation and storage (fermentation, winemaking, storage, transport). KR 2011 0139852 discloses a fermentation method, wherein Korean traditional wine is fermented and aged in a stone fermentor, which may be made of marble. US 2017/029755 discloses a winemaking tank comprising a monolithic hollow body for storing wine.

In particular, in the wine industry, during the different phases for the production of wine, It is well known the use of special vats identified as wine containers intended to contain both the must during fermentation and the wine for its conservation and transportation.

A wine container means any vat of the type barrel, vat, tub, etc. which, in order to be of good quality, must possess the following characteristics:
- it must not create or release pollutants that may be harmful when coming in contact with wine (cement powders, rust, chemicals, moulds),
- absence of supply of unpleasant flavours to wine,
- it must be easy to clean (sanitize the pots),
- perfect tightness.

The materials used to make most of the wine containers currently used for processing or storing wine are the following: wood, cement, steel, fiberglass, food plastic (PVC), glass.

Wooden wine containers or vats (for the fermentation of must) and barrels (for the preservation and aging of wine) are the most valuable vessels.

Vats have a traditionally truncated conical shape, while barrels are vaguely cylindrical, with an elliptical and round cross-section, made of wooden slats, called staves, held together and slightly curved by iron rings and closed by two interlocking bottoms; for their construction it is usually used a wood material such as oak, English oak, chestnut, cherry, acacia, black locust or various species of maple. The first is preferred for barrels to be used for aging wines.

The important characteristic is that they do not completely isolate the wine from the outside, but allow an exchange of oxygen between wine and air which is extremely important for improving the quality and aging of the wine; this exchange, both inwards and outwards, is due to the porosity of the wood: the inward exchange consists in the transfer to the wine of tannic and colouring substances, while the outward one causes oxidation inside the wine (oxidized); the porosity of the wood should not be excessive but very small in order to favour a slow oxidation.

The best wood of all is oak (oak wood, Quercus robur), since it does not yield tannin, it is not very porous and is very robust.

Said wooden vats have the characteristic of yielding ideal aromas for aging wines, but they have the following disadvantages:
- they are very expensive,
- they require a complex and expensive maintenance,
- it is not easy to cooling them,
- they are often a source of bacterial contamination and bad taste.

Vessels made of reinforced concrete almost always have a regular geometric shape, parallelepiped, with a rectangular or square or cylindrical base; formed by a structure also of large dimensions constructed with suitably shaped iron bars immersed in concrete that is made of sand, gravel and cement having in composition both calcium silicates and aluminates obtained at high temperature, then mixed with calcium and water for the hardening.

Such vessels are very economical fixed tanks and have the possibility to have multiple shapes, which is useful to optimize the spaces of the cellar.

Said wine vessels have the characteristic that the cement, in contact with the wine, releases iron or calcium ions and calcium bitartrate crystals can be formed.

Inside, said tanks must be plastered with mortar cement and smoothed with care; in order to avoid the attack of the cement by wine acids, the internal surfaces of the tanks are treated (caulking) with various protective materials such as special tiles or varnishes (epoxy).

Disadvantages of reinforced concrete wine vessels are as follows:
- cleaning is not easy as the must can infiltrate,
- it is not easy cooling them,
- it is very important to check that the inside is well preserved to prevent the very porous cement from coming into contact with the wine.

Another type of wine containers are those in metal that have become widespread both for the fermentation of crushed grapes and for the preservation of wine; they can be made of sheet steel, internally coated or not with polymerised epoxy resins; stainless steel containers, due to their particular characteristics, of almost unlimited duration, are also used (they can be prepared with a gap to circulate a heating or cooling fluid).

Recently steel vats have been widely distributed; steel is an alloy consisting mainly of chromium which is able to "become passive" or to create a thin (molecular) layer of oxide so as to be unaffected by rust and chemicals.

The most current form of these tanks is the vertical cylindrical one. It is also necessary to mention the tanks referred to as autoclaves, in stainless steel or in common steel, for the sparkling of wines. They are particularly robust, able to withstand pressures of 7-9 atm.

They are very light, easy to maintain, they do not yield substances, and have a high heat exchange capacity.

Said steel vats have the characteristic of being neutral containers capable of not altering the organoleptic characteristics of the wine but have the following disadvantages:
- with spontaneous fermentations, where the temperature tends to increase, the steel can send the wine into suffering, developing annoying scents like the hydrogen sulphide, for example;
- in addition to having prominent thermal excursions, it generates magnetic fields because of the different alloys which are used, creating problems for those who do not use filtering because it leaves a series of molecules in suspension;
- they do not allow a good clarification and, therefore, require the wine to be filtered. Fiberglass wine vessels are made of glass fiber reinforced polyester resin; they have good mechanical resistance, remarkable lightness, good chemical inertia and can have a double shell (insulated) and be refrigerated with coils.

Fiberglass wine vessels are widely used in the wine industry for the following advantages:
- sufficient mechanical resistance, considerable lightness and sure non-toxicity;
- long lasting, resistance to chemical and atmospheric agents;
- do not require special maintenance and have good thermal and electrical properties;
- they are not attacked by mould and micro-organisms.

However, a limit of the fiberglass is that it is a material which, as a result of the absorption of liquids, can swell and crack and is expensive with respect to the limited duration.

Furthermore, containers for the fermentation of wine, or of other alcoholic beverages, consisting of rock, basalt, granite or natural stone are also known in the state of the art.

Some of them are illustrated in the following patent documents.

The document CN204198722 (U) entitled "Marble / granite wine-making fermentation vat" illustrates a marble / granite vine vase, usable for the fermentation of wine and provided with three modules that overlapped and fixed to each other by means of reinforcements in steel form a single parallelepiped structure. The invention described in the aforementioned document has some drawbacks, including the complexity of the fixing system of the modules which requires drilling the marble / granite, the tightness in the overlapping area of the modules and the production cost of the modules themselves.

The document US2015337250 (A1) entitled "Liquid container for the manufacture and / or storage of liquid provision for drinking consumption, method for manufacturing thereof and use thereof" illustrates a container, either single or subdivided into stackable modules, made of natural stone, for the production and / or storage of liquids (or fluids), in particular liquids containing alcohol, substantially reusable in an unlimited way and easily stored, having a rough surface structure on its inner wall which allows the exchange of gas with the liquid and favours a more complete chemistry conversion with the need to add only a limited amount of additives that initiate and / or promote processes in the liquid.

The document CN204779537U entitled "Round structure" illustrates a structure for fermentation which involves the use of two containers: a first container made of steel formed by a container having a side embedded at the bottom so as to form a space and a concave surface towards the bottom, provided with at least one through hole and a second container, and its cover, made of felsite, igneous stone, basalt, andesite, rhyolite or phonolite having four sides and positioned inside the first container.

From these state-of-the-art documents, it emerges that containers for the processing of alcoholic beverages made of materials belonging to the group consisting of: natural stone, basalt, granite, magmatic rock, concrete, aluminium-silicate, felsite, igneous stone, andesite, rhyolite or phonolite are well known; some of them consist of stacked modules, with a maximum of three stacked modules, which use mechanical hooking systems, such as metal hinges.

It is also known the process of covering the inner surface of said containers, for example, with concrete or ceramic tiles, in order to isolate the inner surface of the container from the liquid contained therein; according to the chemical-physical characteristics of the inner surface of the container there can be interaction with the contained liquid, in particular it is possible to influence the aroma, the taste of the final drink and the chemical-physical parameters, such as acidity and pH.

The object of the present invention is to provide a compact limestone marble container suitable for allowing the fermentation, treatment and preservation of a beverage or liquid food belonging to the group which includes wine, vinegar, brandy, grappa, beer, and other similar alcoholic beverages, enhancing their natural organoleptic characteristics; said container is provided with a multiplicity of overlapping modules for its easy assembly and disassembly.

The compact calcareous marble consists mainly of calcium carbonate (which reaches values higher than 99% by weight), is a transpiring material (allowing the transfer and the exchange of gas), is porous and with low permeability. The compact calcareous marble is characterized by an imbibition coefficient that is generally between 2.5 ‰ and 13.0 ‰, of which some non-exhaustive examples are reported in the following table:

**Table 1. Examples of compact limestone marble from the Aurisina Caves**

| Type of compact calcareous marble | Calcium carbonate (%) | Coefficient of imbibition (%o) |
|---|---|---|
| Aurisina Granitello | 99,41 | 12 |
| Aurisina Roman Stone | 99,18 | 13 |
| Aurisina Fiorita | 99,12 | 10,6 |
| Aurisina Chiara | 99,51 | 11,8 |
| Repen Classico | 97,79 | 2,5 |

The compact limestone marble, being mainly composed of calcium carbonate, has the ability to influence the pH and acidity degree of the liquids with which it is put in contact.

By virtue of the aforesaid characteristics, the compact limestone marble object of the present invention favours a balanced winemaking and maturation of the wine, without the release of chemical components capable of altering the taste or the aroma of the liquid contained therein. On the contrary, in the case of wooden barrels, the components of the wood and its toasting with the characteristics of the liquid are released into the liquid.

According to an aspect of the present invention, there is provided a marble container with stackable modules for fermented alcoholic beverages as specified in claim 1. This container is modular and can be dismantled and is made entirely of marble, without mechanical coupling systems between the modules, easily sanitized, resistant to temperature changes and resistant to mould, bacteria and humidity. The container, made from blocks of marble, is composed of a series of elements: a base, a lid and a series of stackable modules to form the walls of the container. The components are polished and smooth, they have no sharp edges inside so as to allow the disassembly, as well as an easy deposit, and an easy and deep cleaning.

Suitable filling and emptying holes make it quite similar in function to any other similar container, and thanks to its modularity, it can be adapted in terms of capacity. The adhesion of the modules and its tightness is guaranteed by a layer of glue-sealant suitable for food uses, such as oenological mastic or similar. In a preferred embodiment said oenological mastic comprises wax, paraffin and calcium carbonate.

The internal surface of the modules is covered by a natural substance, that is a film of treating agent, which allows the transpiration, the regulation of the permeability and the regulation of the exchange of hydrogen ions with the material of which the container is made. In a preferred embodiment, said treating agent is a natural substance composed of beeswax.

The most innovative aspect of the container object of the present description is linked to the following main aspects:
- modularity,
- the system for joining the modules,
- the internal treatment of the surface that allows the control of the interaction between the liquid food contained and the surface of the container itself,
- the production process, which allows the production of a high polyphenol content drink without altering the taste and the original aroma.

### Brief description of the drawings

Other advantages and characteristics of the illustrated marble container will be apparent from the following detailed description of an embodiment, presented for illustrative and non-limiting purposes and with particular reference to the attached figures and related references in the legend, in which:

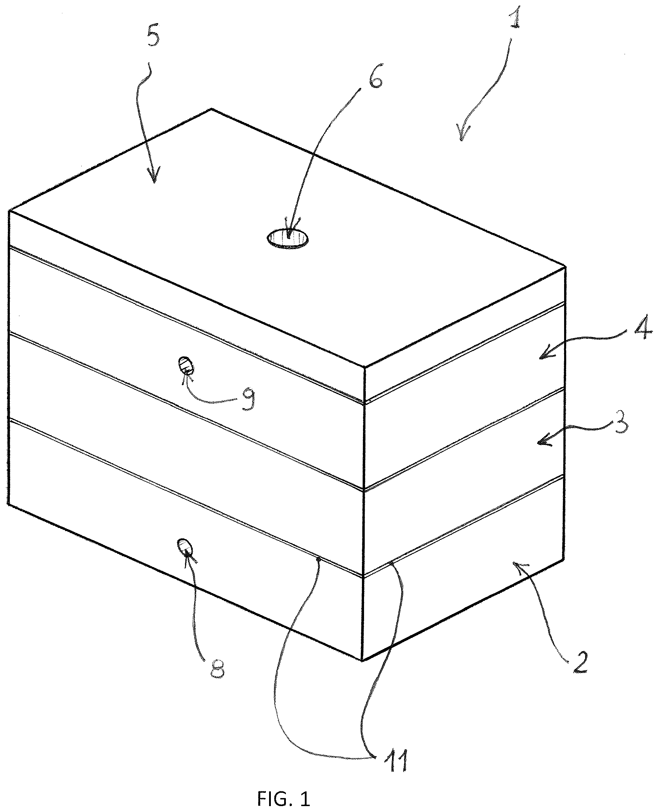

Figure 1 is an axonometric view of a parallelepiped-shaped marble container provided with a bottom element, two stackable elements and a covering element;

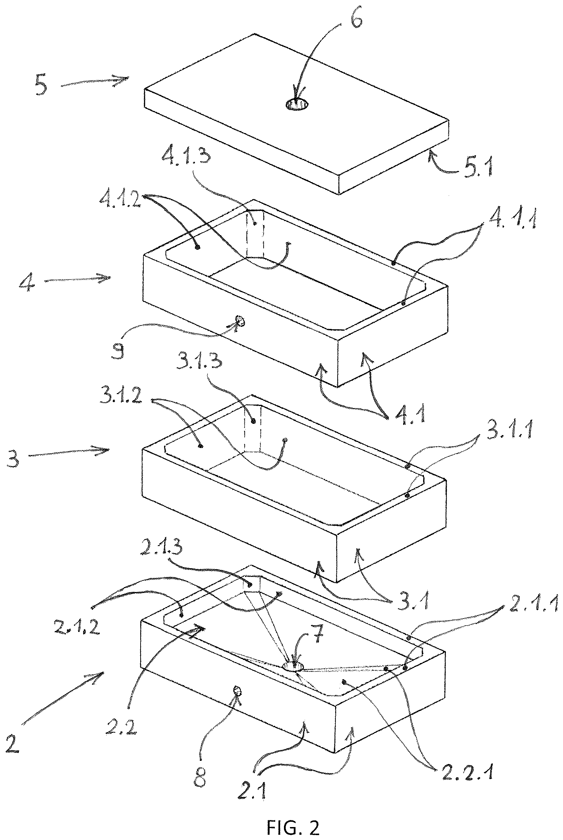

Figure 2 is an exploded axonometric view of the container of Figure 1;

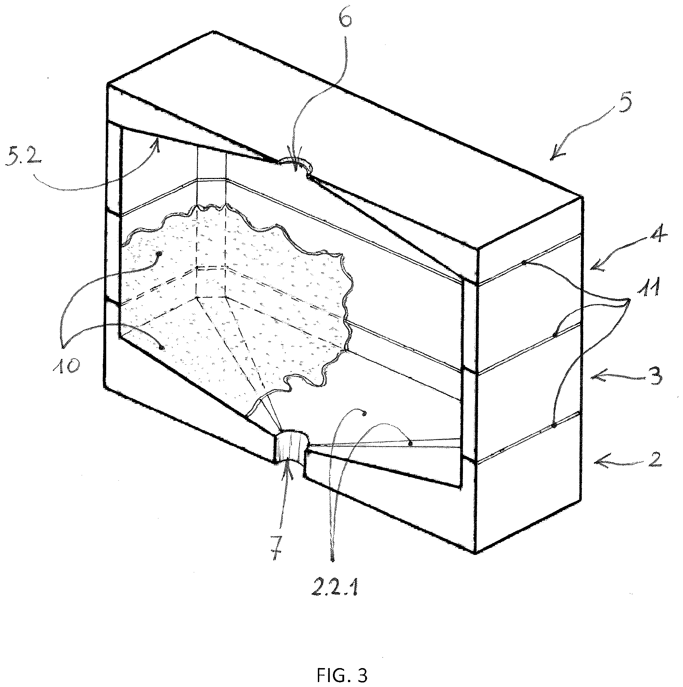

Figure 3 is an axonometric sectional view of the container of Figure 1;

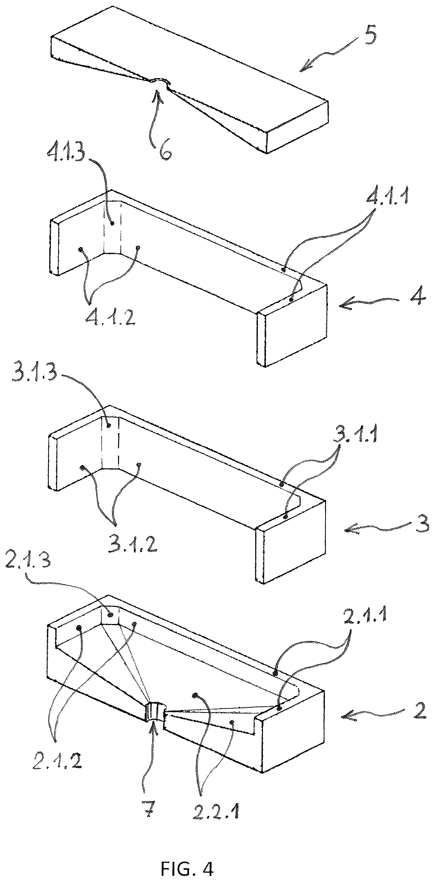

Figure 4 is an exploded axonometric view of the container in section of Figure 3.

### Legend

1 - marble container
2 - bottom element
   2.1 - walls of the bottom element
   2.1.1 - upper surfaces of the walls of the bottom element
   2.1.2 - internal surfaces of the walls of the bottom element
   2.1.3 - internal angular surfaces of the walls of the bottom element
   2.2 - base of the bottom element
   2.2.1 - upper surface of the base of the bottom element
3 - hollow stackable element
   3.1 - wall of the hollow stackable element 3
   3.1.1 - upper and lower surfaces of the walls of the hollow stackable element 3
   3.1.2 - internal surfaces of the walls of the hollow stackable element 3
   3.1.3 - internal angular surfaces of the walls of the hollow stackable element 3
4 - stackable cable element
   4.1 - wall of the hollow stackable element 4
   4.1.1 - upper and lower surfaces of the walls of the hollow stackable element 4
   4.1.2 - internal surfaces of the walls of the hollow stackable element 4
   4.1.3 - internal angular surfaces of the walls of the hollow stackable element 4
5 - covering element
   5.1 - perimeter portion of the lower surface of the covering element
   5.2 - lower surface of the covering element
6 - through hole of the covering element 5
7 - through hole on the base of the bottom element 2
8 - through hole on a side wall 2.1 of the bottom element 2
9 - through hole on a side wall 4.1 of the hollow stackable element 4
10 - treatment agent
11 - natural glue/sealant

### Description

The marble container 1 shown in the figures is of parallelepiped shape and is composed of a bottom element 2, open at the top and provided with walls 2.1 and a base 2.2, by two hollow stackable elements 3, 4, provided with walls 3.1, 4.1, superimposed on said bottom element 2, and a covering element 5, superimposed on said hollow stackable elements 3, 4.

The covering element 5 is provided with a central through hole 6, for filling / topping the container, while the bottom element 2 is provided on the base 2.2 with a central through hole 7, coaxial with the hole 6, for emptying the whole container.

For this purpose, the upper surface 2.2.1 of the base 2.2 of the bottom element 2 is formed by inclined surfaces converging around the through hole 7 having the purpose of facilitating the outflow of the liquid contained therein and the emptying of the container.

The bottom element 2 is further provided with a further through hole 8, positioned "overflow" on one of its side walls 2.1.2, having the function of promoting the drawing off of the liquid contained leaving the dregs in the container.

A through hole 9, having the function of providing a seat for inserting a stapler, is formed on one of the side walls 4.1.2 of the hollow element 4.

In order to facilitate the assembly and surface adhesion between the elements that make up the container, the upper surfaces 2.1.1 of said walls 2.1, the upper and lower surfaces 3.1.1, 4.1.1 of said walls 3.1, 4.1 and perimeter portion 5.1 of the lower surface 5.2 of said covering element 5 are smooth and suitable for allowing mutual assembly by interposing a glue-sealant 11.

The applied natural glue-sealant 11 is a putty for oenological use made up of wax, paraffin and calcium carbonate, which is also used for the repair of wine pots and as a sealant for sapphires or lids.

The inner surfaces 2.1.2, 2.1.3 and 2.2.1 respectively of said walls 2.1 and of said base 2.2, the internal surfaces 3.1.2, 3.1.3, 4.1.2, 4.1.3 of said walls 3.1, 4.1 and the lower surface 5.2 of said covering element 5 are also smooth to facilitate the homogeneous distribution of a treating agent 10 applied by caulking process.

The treating agent 10 is a natural compound for food use, such as beeswax, and is applied to the inner surface of the container so as to form a thin film of the treating agent. The smooth surface of the inner walls of the container modules allows the application of the treating agent on the surface layer to obtain a thin film with a thickness of less than 1 mm, preferably less than 500 microns, so as to minimize interactions between the treating agent 10 and the beverage contained in the container but, at the same time, so that the amount of treating agent 10 deposited on the surface allows to regulate the de-acidification action which is effected by the inner surface of the container with respect to the contained liquid.

The treating agent 10 affects and limits the increase in pH during treatment and storage of the beverage; if the modules are assembled as they are (i.e. without the deposition of a thin film of the treating agent) the pH of the beverage gradually rises. Generally, an imbibition coefficient lower than 10 %o allows a better regulation of the pH of the beverage. Increment coefficients higher than 10 ‰ imply a greater absorption of liquid by the walls of the container and therefore a greater surface area of calcium carbonate in contact with the beverage, with a consequent increase in interaction between the aforementioned drink at acidic pH and the carbonate of the walls of the container.

All the aforementioned caulking and assembly operations of the modules are carried out "hot", preheating the beeswax and the oenological mastic to seal the modules and favour the homogeneous deposition of the thin film of the treating agent on the smooth inner walls of the container.

To form the seal between one module and another, the oenological mastic must be heated in a water bath until obtaining a ductile paste to be spread in a 5 mm diameter rope.

The fundamental characteristic of the container is that its internal surface has no sharp edges (concave profile), the internal angular surfaces 3.1.3, 4.1.3 of the walls 3.1.2, 4.1.2 of the hollow stackable elements 3, 4 are deliberately rounded to avoid the accumulation of the treating agent or of residues of the drink (as for example in the case of must) and, moreover, to avoid the proliferation of moulds that often develop in the corners.

Thanks to the absence of edges and to the smooth surface, the inside of the container is easier to sanitize because the roughness is brought to a minimum. The modules do not provide grooves or joints in order to have significant advantages in production costs, and with the aim to avoid points of fragile junction both during assembly and during dismantling.

In a preferred embodiment, the container is entirely made of marble obtained from blocks of the Aurisina Caves, a list of which is given in Table 1 by way of example only.

More in detail one of the marbles used to make the marble container is, among others, the Aurisina Fiorita. Also called Aurisina brecciata, the Aurisina Fiorita is a compact limestone, made up of a very rich organic fraction represented by fragments of a very variable shape and size; it has chemical, physical and mechanical properties such as to allow a specific application for the production of the modular containers of the present invention. The imbibition coefficient of the aforesaid compact calcareous marble Aurisina Fiorita is generally 10.0 ‰ and in a preferred embodiment it is equal to 10.6 %o. The set of chemical-physical and mechanical characteristics of the container made with the aforesaid compact calcareous marble - in particular the smooth surface, the coefficient of imbibition and the porosity - allow an adequate application of the thin film of the treating agent 10, so that said thin film is able to regulate the interaction between the smooth surface inside the container and the liquid contained in the vat.

The number of stackable modules 3 forming the walls of the container depends on the type of marble used and the relative coefficient of resistance to crushing (in the case of Aurisina fiorita it is 1455 kg / cm), or how high the roof of the cellar is, or from the reach of the crane arm to lift the modules.

In a preferred embodiment of the present invention each stackable module 3 is a hollow parallelepiped having the following dimensions cm 73,5 X 45.5 X 15, a thickness of 3 cm and a capacity of about 40 litres.

The height of 15 cm of each module is the maximum reachable by the numerically controlled machine that mills the block of marble compared to the economy of processing times, i.e. greater depth should be obtained manually as there are no machines available that can process greater thicknesses.

In addition, the thickness of the finished module walls of 3 cm brings the total weight of the same lower than 25 kg that is the maximum weight lifted by a person according to the law 81/08 on the subject of safety at work in Italy.

The temperature range at which the marble vat can operate can fluctuate between + 1 ° C and + 30 ° C; higher temperatures are reached in the washing and sanitizing operations due to the use of high pressure steam and chemical cleaning agents. Advantageously, the container according to the present description allows a modular and variable conformation according to the fermentation and storage requirements.

Furthermore, the treatment of the inner surface by means of a specific treatment agent 10 favours the control of the interaction between the contained food liquid and the surface of the container itself.

The above factors show better behaviour of the stone compared to wood in this phase from the point of view of porosity, fibrousness, hygroscopicity, and being unassailable.

For illustrative purposes, the following is a description of a preferred embodiment of the compact limestone marble container and its use in the treatment of wine.

### Example of wine treatment with a compact limestone marble container

In a preferred embodiment of the present invention five modules are stacked for a total capacity of 240 litres, wherein each of the aforesaid modules is a hollow parallelepiped having the following dimensions 73.5 x 45.5 X 15 cm, and a thickness of 3 cm and made according to what is described in the present invention. The aforesaid container is filled with Merlot red wine to be subjected to fermentation. The treatment of the wine has a duration of seven months in the aforesaid container, in which the inner walls are previously covered by a film of a treating agent having a thickness of 500 microns. Said treatment agent is natural beeswax. Before treatment in the aforesaid container, the wine has an acid value of 6.50 g / I and a pH value of 3.70. Following the treatment for seven months in the container in which the internal walls are covered by the treating agent, the wine has an acid value of 6.30 g / l and a pH value of 3.77.

The same wine, subjected to treatment for 72 h in the compact limestone marble container according to the present invention in which the walls are not coated with a treating agent, shows a rapid de-acidification with values of acidity and pH significantly different from the wine subjected to treatment in the compact limestone marble container in which the interior walls are covered by the treating agent film. Following the treatment of Merlot wine in the aforesaid vat in which the walls are not coated with a treating agent, the acidity value is 3.90 g / l and the pH is equal to 4.67.

The marble container with stackable modules for fermented alcoholic drinks according to the present description is susceptible of numerous modifications and variations, all of which are covered by the inventive concept expressed in the attached claims.

All the details may be replaced by other technically equivalent elements according to requirements, without departing from the scope of protection of the present invention.

Even if the invention has been described with particular reference to the attached figures, the reference numbers used in the description and in the claims are used to improve the intelligence of the invention and do not constitute any limitation to the scope of protection claimed.

## Claims

1. Marble vat with stackable elements for fermented alcoholic beverages, comprising:
- a bottom element (2), open at the top and provided with walls (2.1) and with a base (2.2),
- at least two hollow stackable elements (3, 4), provided with walls (3.1, 4.1), superimposed on said bottom element (2), and
- a cover element (5), superimposed on said hollow elements (3, 4),
**characterized in that** the upper surfaces (2.1.1) of said walls (2.1), the upper and lower surfaces (3.1.1, 4.1.1) of said walls (3.1, 4.1) and the perimetric portion (5.1) of the bottom surface of said cover element (5) are smooth and suitable to allow reciprocal assembly by interposing of a sealant (11), **in that** the inner surfaces (2.1.2, 2.1.3) and (2.2.1) respectively of said walls (2.1) and of said base (2.2), the inner surfaces (3.1, 3.1.3, 4.1.2, 4.1.3) of said walls (3.1, 4.1) and the lower surface (5.2) of said covering element (5) are also smooth and coated by a treatment agent film (10) applied by a caulking process, and **in that** the inner corner surfaces of the bottom element (2) and of the stackable elements (3, 4) have no sharp edges but rounded concave edges (2.1.3, 3.1.3, 4.1.3).

2. The marble vat according to claim 1, **characterized in that** the sealant (11) is a natural mastic for enological use, consisting of wax, paraffin and calcium carbonate.

3. The marble vat according to claim 1, **characterized in that** the treatment agent (10) is natural and is virgin bee wax.

4. The marble vat according to claims 1 and 3, **characterized in that** the treatment agent (10) is a thin film having a thickness of less than 1 millimeter.

5. The marble vat according to any of the preceding claims, **characterized in that** the application of the sealant (11) and of the treatment agent (10) is carried out after heat treatment.

6. The marble vat according to any of the preceding claims 1 to 5, **characterized in that** it is made of calcareous marble with a high percentage of calcium carbonate suitable to regulate the acidity of fermented alcoholic beverages.

7. The marble vat according to any of the preceding claims, **characterized in that** the cover element (5) is provided with a central through hole (6) for filling / refilling the vat.

8. The marble vat according to any of the preceding claims, **characterized in that** the bottom element (2) is provided on the base (2.2) of a central through hole (7), coaxial to the hole (6), for the total emptying of vat.

9. The marble vat according to any of the preceding claims, **characterized in that** the upper surface (2.2.1) of the base (2.2) of the bottom element (2) is formed by inclined surfaces converging around the through hole (7).

10. The marble vat according to any of the preceding claims, **characterized in that** a through hole (8) is obtained on one of sidewalls (2.1.2) of the bottom element (2).

## Patentansprüche

1. Marmorbehälter mit stapelbaren Elementen für fermentierte alkoholische Getränke, umfassend:
- ein Bodenelement (2), das oben offen ist und mit Wänden (2.1) und einer Basis (2.2) versehen ist,
- mindestens zwei hohle stapelbare Elemente (3.4), die mit Wänden (3.1, 4.1) versehen sind, die über dem Bodenelement (2) liegen, und
- ein Abdeckelement (5), das über den hohlen Elementen (3, 4) liegt,
**dadurch gekennzeichnet, dass** die oberen Flächen (2.1.1) der Wände (2.1), die oberen und unteren Flächen (3.1.1, 4.1.1) der Wände (3.1, 4.1) und der Umfangsteil (5.1) der Bodenfläche des Abdeckelements (5) glatt sind und geeignet, um eine wechselseitige Montage unter Zwischenschaltung eines Dichtungsmittels (11) zu ermöglichen, das die Innenflächen (2.1.2, 2.1.3) bzw. (2.2.1) der Wände (2. 1) und der Basis (2.2) aufweist, wobei die Innenflächen (3.1, 3.1.3, 4.1.2, 4.1.3) der Wände (3.1, 4.1) und die Unterseite (5.2) der Abdeckelements (5) sind ebenfalls glatt und sind mit einem Film eines Behandlungsmittels (10) beschichtet, das mittels eines Abdichtungsverfahrens aufgetragen wird und dass die inneren Kantenflächen des Bodenelements (2) und der stapelbaren Elemente (3, 4) keine scharfen Kanten, sondern abgerundete konkave Kanten (2.3, 3.13, 4.1.3) aufweisen.

2. Marmorbehälter nach Anspruch 1, **dadurch gekennzeichnet, dass** das Dichtungsmittel (11) ein natürlicher Mastix zur önologischen Verwendung ist, bestehend aus Wachs, Paraffin und Calciumcarbonat.

3. Marmorbehälter nach Anspruch 1, **dadurch gekennzeichnet, dass** das Behandlungsmittel (10) natürlich ist und aus jungfräulichem Bienenwachs gebildet wird.

4. Marmorbehälter nach Anspruch 1 und 3, **dadurch gekennzeichnet, dass** das Behandlungsmittel (10) ein dünner Film mit einer Dicke von weniger als 1 Millimeter ist.

5. Marmorbehälter nach einem der vorhergehenden Ansprüche, **dadurch gekennzeichnet, dass** das Aufbringen des Dichtungsmittels (11) und des Behandlungsmittels (10) nach einer Wärmebehandlung erfolgt.

6. Marmorbehälter nach einem der vorhergehenden Ansprüche 1 bis 5, **dadurch gekennzeichnet, dass** es aus einem Kalksteinmarmor mit einem hohen Anteil an Calciumcarbonat gebildet ist, der zur Regulierung des Säuregehalts von fermentierten alkoholischen Getränken geeignet ist.

7. Marmorbehälter nach einem der vorhergehenden Ansprüche, **dadurch gekennzeichnet, dass** das Abdeckelement (5) mit einem zentralen Durchgangsloch (6) zum Befüllen/Nachfüllen des Behälters versehen ist.

8. Marmorbehälter nach einem der vorhergehenden Ansprüche, **dadurch gekennzeichnet, dass** das Bodenelement (2) an der Basis (2.2) mit einem zentralen Durchgangsloch (7) versehen ist, das koaxial zum Loch (6) ist, zur vollständigen Entleerung des Behälters.

9. Marmorbehälter nach einem der vorhergehenden Ansprüche, **dadurch gekennzeichnet, dass** die obere Fläche (2.2.1) der Basis (2.2) des Bodenelements (2) durch geneigte Flächen gebildet wird, die um das Durchgangsloch (7) zusammenlaufen.

10. Marmorbehälter nach einem der vorhergehenden Ansprüche, **dadurch gekennzeichnet, dass** an einer der Seitenwände (2.1.2) des Bodenelements (2) ein Durchgangsloch (8) erhalten wird.

## Revendications

1. Récipient en marbre avec éléments empilables pour boissons alcoolisées fermentées, comprenant:
- un élément de fond (2) ouvert en haut et pourvu de parois (2.1) et d'une base (2.2),
- au moins deux éléments empilables creux (3.4), pourvus de parois (3.1, 4.1), recouvrant ledit élément de fond (2), et
- un élément de recouvrement (5) recouvrant lesdits éléments creux (3, 4),
**caractérisé en ce que** les surfaces supérieures (2.1.1) desdites parois (2.1), les surfaces supérieure et inférieure (3.1.1, 4.1.1) desdites parois (3.1, 4.1) et la partie périphérique (5.1) de la surface de fond dudit élément de recouvrement (5) sont lisses et aptes à permettre un assemblage réciproque avec interposition d'un produit d'étanchéité (11), dont les surfaces internes (2.1.2, 2.1.3) et (2.2.1) respectivement desdites parois (2.1) et de ladite base (2.2), les surfaces internes (3.1, 3.1.3, 4.1.2, 4.1.3) desdites parois (3.1, 4.1) et la surface inférieure (5.2) dudit élément de recouvrement (5) sont également lisses et enduites d'un film d'un agent de traitement (10) appliqué au moyen d'un procédé de calfeutrage, et que les surfaces angulaires internes de l'élément de fond (2) et des éléments empilables (3, 4) n'ont pas d'arêtes vives mais des arêtes concaves arrondies (2.3, 3.1.3, 4.1.3).

2. Récipient en marbre selon la revendication 1, **caractérisé en ce que** le produit d'étanchéité (11) est un mastic naturel à usage œnologique, constitué de cire, de paraffine et de carbonate de calcium.

3. Récipient en marbre selon la revendication 1, **caractérisé en ce que** l'agent de traitement (10) est naturel et est formé à partir de cire d'abeille vierge.

4. Récipient en marbre selon les revendications 1 et 3, **caractérisé en ce que** l'agent de traitement (10) est un film mince d'une épaisseur inférieure à 1 millimètre.

5. Récipient en marbre selon l'une des revendications précédentes, **caractérisé en ce que** l'application du produit d'étanchéité (11) et de l'agent de traitement (10) est réalisée après un traitement thermique.

6. Récipient en marbre selon l'une des revendications 1 à 5 précédentes, **caractérisé en ce qu'**il est formé d'un marbre calcaire à fort pourcentage de carbonate de calcium, apte à réguler l'acidité des boissons alcoolisées fermentées.

7. Récipient en marbre selon l'une des revendications précédentes, **caractérisé en ce que** l'élément de recouvrement (5) est pourvu d'un trou central traversant (6) pour le remplissage/nouveau remplissage du récipient.

8. Récipient en marbre selon l'une des revendications précédentes, **caractérisé en ce que** l'élément de fond (2) est pourvu sur le fond (2.2) d'un trou central traversant (7), coaxial avec le trou (6), pour une vidange totale du récipient.

9. Récipient en marbre selon l'une des revendications précédentes, **caractérisé en ce que** la surface supérieure (2.2.1) de la base (2.2) de l'élément de fond (2) est formée par des surfaces inclinées qui convergent autour du trou traversant (7) .

10. Récipient en marbre selon l'une des revendications précédentes, **caractérisé en ce qu'**un trou traversant (8) est obtenu sur l'une des parois latérales (2.1.2) de l'élément de fond (2).
